# EUROPEAN PATENT SPECIFICATION

(11) **EP 4 399 971 B1**
(45) Date of publication and mention of the grant of the patent: **09.12.2026**
(21) Application number: 24150090.9
(22) Date of filing: 02.01.2024
(51) Int. Cl.: A01M 21/04

(54) **WEED BURNER**
UNKRAUTBRENNER
BRÛLEUR POUR MAUVAISES HERBES

(30) Priority: 06.01.2023 CN 202310020986
(43) Date of publication of application: 17.07.2024
(73) Proprietor: Zhejiang Prulde Electric Appliance Co., Ltd., Jinhua, Zhejiang 321035 (CN); Batavia B.V., 7951 SN Staphorst (NL)
(72) Inventor: Yang, Weiming, Jinhua City, 321035 (CN); Paais, Raymond, 7951 SN Staphorst (NL)
(74) Representative: karo IP

(56) References cited:
- EP-A1- 3 973 775
- FR-A1- 2 770 969
- SE-B- 386 355
- US-A1- 2018 132 473

## Description

### FIELD

The disclosure relates to weed removal tools, and more particularly relates to a weed burner.

### BACKGROUND

A conventional high-voltage arcing weed burner has its electrode assembly for generating high-voltage arcs disposed at a bottom portion thereof, so that in operation, a main body portion of the weed burner needs to contact or get close to a weed. However, the high-voltage arcs generated by the operating weed burner easily leak, which would not only cause damages to desirable plants, but also cause hazards to the operator. For example, CN113170773A discloses a weed burner, in the main body of which are provided a positive electrode (62) and a first negative electrode (63) that are electrically connected to a high-voltage transmitter (61), at a bottom end of the handle being provided a second negative electrode (64) electrically connected to the high-voltage transmitter (61), the first negative electrode (63) being disposed between the positive electrode (62) and the second negative electrode (64). In the patent noted *supra,* when operating the weed burner, the user needs to control a position of the weed relative to the positive electrode and the first negative electrode or a position of the weed relative to the positive electrode and the second negative electrode. However, the positive electrode, the first negative electrode, and the second negative electrode are invisible to the user operating the weed burner, so that it would be hard for the user to determine relative positional relationships of the weed with the positive electrode, the first negative electrode, and the second negative electrode, causing poor operability to the user, deteriorating weed removal efficiency and effect, and damping user experience.

Furthermore, SE 386 355 B describes sets and devices for damping or reducing the growth of plants by use of a high frequency, electromagnetic field, microwave region, EP 3 973 775 A1 and US 2018/0132473 A1 describe apparatuses and a methods for electrically killing plants and FR 2 770 969 A1 describes an electric, selective and guided weed killer.

### SUMMARY

An objective of the disclosure is to provide a weed burner so as to solve the problem that a user can hardly align with a weed during operation, eliminating a need for a user to consider a relative position between a weed and an electrode assembly, thereby improving user operationality.

To achieve the objective above, the disclosure adopts a technical solution below: a weed burner, comprising a main body and a handle, the main body comprising a base portion and an operating portion, the base portion being connected to the handle, the operating portion projecting forwardly relative to the base portion, wherein the operating portion is provided with an arcing chamber for letting in a plant and an electrode assembly for discharging high-voltage arcs to the plant in the arcing chamber, the arcing chamber extending through the operating portion, a bottom end of the arcing chamber being opened and located at an underside of the operating portion; and the electrode assembly comprises a positive electrode and a negative electrode, the positive electrode being disposed in the operating portion and tilting downward into the arcing chamber, the negative electrode being disposed at an underside of the operating portion and surrounding an opening of the bottom end of the arcing chamber.

With the technical solution noted *supra,* the disclosure offers the following advantages: the negative electrode of the weed burner is located at the underside of the operating portion and surrounds the opening of the bottom end of the arcing chamber, so that when operating the weed burner, the user needn't consider a relative positional relationship between the electrode assembly and the weed; instead, it is only required to let the weed in the arcing chamber. Furthermore, the arcing chamber extends through the operating portion, so that the user may directly observe whether the weed has entered the arcing chamber; at which time since the annular negative electrode surrounds the weed, the annular negative electrode may guarantee that the high-voltage arcs discharged by the positive electrode are conducted to the negative electrode via the weed, thereby killing the weed, which can improve user operationality to a great extent. In addition, by directly observing the plant entering the arcing chamber to determine whether it is the to-be-killed plant or whether a plant not intended to kill has entered the arcing chamber, the accuracy of weed removal is enhanced.

Furthermore, the operating portion comprises a base plate, an upper cover, and a cylindrical body forming the arcing chamber, a top end of the cylindrical body being connected to the upper cover, a bottom end of the cylindrical body being connected to the base plate, the arcing chamber extending through the base plate and the upper cover, the positive electrode extending through the cylindrical body into the arcing chamber, the negative electrode being mounted at a lower surface of the base plate. With this solution, fitting between the base plate and the upper cover may form a mounting space for the positive electrode, while connection between the top end of the cylindrical body and the upper cover and connection between the bottom end and the base plate may support the base plate and the upper cover, whereby structural strength of the assembled operating portion is enhanced. The negative electrode is mounted at a lower surface of the base plate, so that it may directly contact the ground, which facilitates directing the high-voltage arcs to the root of the weed to thereby enhance weed killing effect.

Furthermore, the cylindrical body and the upper cover are formed of a unitary structure, or the cylindrical body and the base plate are formed of a unitary structure. With this technical solution, the unitary structure formed by cylindrical body and the upper cover or the base plate can reduce the number of parts, which facilitates assembly; the unitary structure formed by the cylindrical body and the base plate enables the base to form a structural support to the periphery of the cylindrical body, which increases structural stability of the cylindrical body and thereby extends service life of the cylindrical body.

Furthermore, the bottom end of the cylindrical body is formed of a flared opening at an inner wall of the arcing chamber to guide the plant to enter the arcing chamber. With this technical solution, the weed may enter the arcing chamber more quickly and smoothly along the flared opening, which further improves user operationality.

Furthermore, the cylindrical body and the negative electrode are both of circular shapes and concentric with each other. With this technical solution, after the weed enters the arcing chamber, irrespective of how it tilts, its distance from the negative electrode is surely the minimum, which facilitates conduction of high-voltage arcs, further enhancing weed removal efficiency and effect. Furthermore, since the negative electrode employs a ring-shaped structure, a largest area may be obtained under the same peripheral length; in this way, the opening of the bottom end of the arcing chamber may be made larger to facilitate the weed to enter.

Furthermore, the handle comprises a grip and a connecting tube, the connecting tube being connected between the grip and the base portion, a battery for supplying power to the electrode assembly being disposed at a bottom portion of the grip, the battery and the operating portion are disposed at front and rear sides of the connecting tube in a horizontal direction, respectively, to balance center of gravity. With this technical solution, given that the weights of all components are constant, when moving the weed burner, the user may lift the weed burner off with the hand gripping the connecting tube, so that the operating portion leaves the ground; with the position where the connecting tube is gripped by the hand as the fulcrum, the overall weed burner is formed as a lever, while the weight of the battery and the weight of the operating portion have reached certain balance relative to the fulcrum, the user does not need to lift the weight of the whole main body when changing the position of the operating portion; therefore, the hand holding the grip may easily change the position of the operating portion relative to the ground, which can not only save efforts of the user, but also can quickly and accurately let the weed in the arcing chamber, thereby enhancing weed removal efficiency.

Furthermore, an operating switch for controlling operation of the electrode assembly is provided at a top portion of the grip. This technical solution improves user operationality in case of frequently energizing and deenergizing the electrode assembly.

Furthermore, the base portion is provided with a safety switch electrically connected to the electrode assembly, a sliding groove having a downward opening is provided at an underside of the base portion, a slider is provided in the sliding groove, on the slider is provided an elastic member maintaining a tendency of the slider to project out of the sliding groove, and the slider is provided with a trigger portion for triggering the safety switch when an underside of the slider is in flush with the underside of the operating portion. With this technical solution, when the main body is vertically oriented on the ground to perform a weed burning operation, the slider moves upward along the sliding groove; when the underside of the slider becomes in flush with the underside of the main body, the trigger portion of the slider triggers the safety switch, so that the electrode assembly can be activated normally. Cooperation between the slider and the safety switch ensures that the electrode assembly is only activated when the main body is vertically oriented on the ground, which prevents unintentional activation of the electrode assembly and thus enhances operational safety. The sliding groove has a downward opening; the slider slides along the sliding groove; when the underside of the main body leaves the ground, the slider can drive, under its own gravitational force, the trigger portion away from the safety switch, whereby the electrode assembly is deactivated, realizing automatic shutdown; in this way, if an emergency occurs during operation, the electrode assembly may be shut down so long as the underside of the main body leaves the ground, e.g., toppling the weed burner on the ground, thereby reducing possible occurrence of accidents and further enhancing operational safety of the disclosure. In addition, the elastic member provided on the slider can maintain the slider to always have a tendency of projecting out of the sliding groove, so as to ensure that the trigger portion can move away from the safety switch when the underside of the main body leaves the ground, further reducing possibility of unintentional activation of the electrode assembly. Furthermore, when the main body topples, the elastic member can still drive the slider to project out of the sliding groove, thereby reducing possibility of unintentional activation of the electrode assembly.

Furthermore, a transparent insulation hood is provided on the operating portion to cover on top of the arcing chamber. With this technical solution, the transparent insulation hood does not affect the user's line of sight when observing the arcing chamber, but may shield the top portion of the arcing chamber to prevent dust flying during the weed removal process, which can maintain the upper surface of the main body clean, further enhancing user experience. The transparent insulation hood can also prevent random flying of sparks generated during weed removal, which reduces potential occurrence of hazard accidents and further lowers safety risks. The transparent insulation hood can also prevent safety incidents from occurring when a human body part enters the arcing chamber via the top portion while the weed burner is operating.

Furthermore, a display interface is provided at a top end surface of the base portion; and/or, the base portion is provided with a loudspeaker. With this technical solution, user experience is further enhanced, where the user can directly observe an operating status of the weed burner via the display interface; the loudspeaker may provide an audio alert to the user.

### BRIEF DESCRIPTION OF THE DRAWINGS

Hereinafter, the disclosure will be further illustrated in conjunction with the accompanying drawings:
Fig. 1 is a structural schematic diagram of a weed burner according to the disclosure;
Fig. 2 is a sectional view of a weed burner according to the disclosure;
Fig. 3 is a local sectional view of a main body according to the disclosure;
Fig. 4 is a bottom view of a weed burner according to the disclosure.

### DETAILED DESCRIPTION OF EMBODIMENTS

The terms like "first," "second," "third," and "fourth" (if existent) in the specification, claims, and drawings are used for distinguishing like objects, not necessarily used for describing a specific sequence or priority. It should be understood that features termed with such numerals may be replaced with each other in appropriate circumstances, such that the example embodiments of the disclosure described herein can be implemented in a sequence not illustrated or described here.

It will be understood that the terms "comprise" and "have," as well as any of their variants, intent for a non-exclusive inclusion, e.g., a process, method, system, product, or apparatus comprising a series of steps or units are not necessarily limited to those steps or units explicitly limited herein, but may further comprise other steps or units not explicitly limited herein or inherent to such a process, method, product or apparatus.

It will be understood that in the disclosure, the term "plurality" refers to two or more. The term "and/or" only describes an association relationship of associated objects, which indicates that there may exist three relationships, e.g., X and/or Y may indicate three circumstances: X individually, or both X and Y together, or Y individually. The character "/" generally indicates a relationship of "or" between the former and latter associated objects. The term "comprising X, Y, and Z" or "comprising X, Y, Z" refers to comprising all of X, Y, and Z; the term "comprising X, Y, or Z" refers to comprising one of X, Y, and Z; the term "comprising X, Y and/or Z" refers to comply any one, or any two, or three of X, Y, and Z.

Hereinafter, the technical solution of the disclosure will be described in detail via specific example embodiments. The specific example embodiments as will be described below may be combined mutually or replaced with each other dependent on actual conditions; for same or similar concepts or processes, they may not be repeated in some example embodiments.

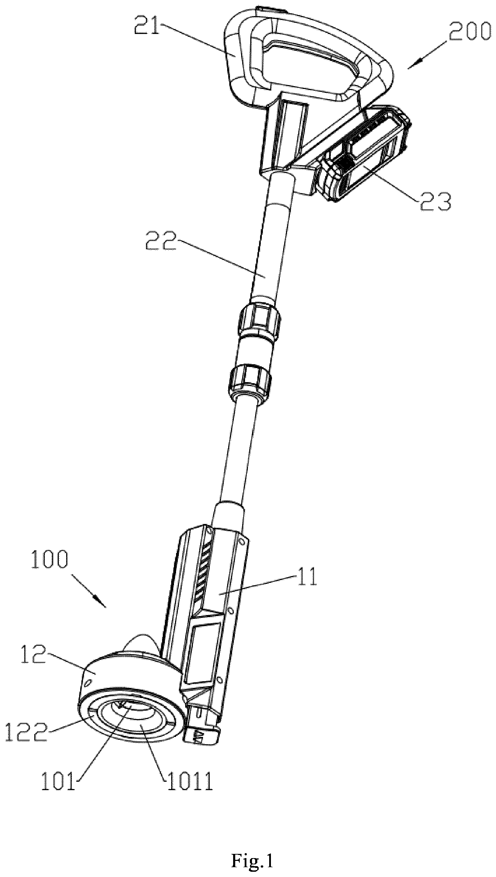

As illustrated in Figs. 1 to 4, the disclosure provides a weed burner, comprising a main body 100 and a handle 200; the main body 100 comprises a base portion 11 and an operating portion 12, the base portion 11 being connected to the handle 200, the operating portion 12 projecting forwardly relative to the base portion 11; the operating portion 12 is provided with an arcing chamber 101 for letting in a plant and an electrode assembly discharging high-voltage arcs to the plant in the arcing chamber 101; the arcing chamber 101 extends through the operating portion 12, a bottom end of the arcing chamber 101 being opened and located at an underside of the operating portion 12; the electrode assembly comprises a positive electrode 121 and a negative electrode 122, the positive electrode 121 being disposed in the operating portion 12 and tilting downward into the arcing chamber 101, the negative electrode 122 being disposed at the underside of the operating portion 12 and surrounding an opening 1011 of the bottom end of the arcing chamber 101.

In the disclosure, the negative electrode 122 is disposed at the underside of the operating portion 12 and surrounds the opening 1011 of the bottom end of the arcing chamber 101, so that when operating the weed burner, the user needn't consider the relative positional relationship between the electrode assembly and the weed, where it is only required that the weed can enter the arcing chamber 101. Since the arcing chamber 101 extends through the operating portion 12, the user may directly observe whether the weed has entered the arcing chamber 101. Since the annular negative electrode 122 surrounds the weed, it may be guaranteed that the high-voltage arcs discharged by the positive electrode 121 are conducted to the negative electrode 122 via the weed, whereby the weed is killed, which improves user operationality to a great extent. Additionally, by directly observing the plant entering the arcing chamber 101, it may be determined as to whether the plant is the one intended to kill, or whether a plant not intended to kill is let in the arcing chamber 101, whereby plant removal accuracy is enhanced.

In a specific example structure, the operating portion 12 may comprise a base plate 123, an upper cover 124, and a cylindrical body 125 forming the arcing chamber 101; a top end of the cylindrical body 125 is connected to the upper cover 124, and a bottom end thereof is connected to the base plate 123; the arcing chamber 101 extends through the base plate 123 and the upper cover 124; the positive electrode 121 extends through the cylindrical body 125 into the arcing chamber 101; and the negative electrode 122 is mounted at a lower surface of the base plate 123. Fitting between the base plate 123 and the upper cover 124 may form a mounting space for the positive electrode 121, while the connection between the top end of the cylindrical body 125 and the upper cover 124 and the connection between the bottom end thereof and the base plate 123 provide a support to the base plate 123 and the upper cover 124, thereby enhancing structural strength of the assembled operating portion 12. By mounting the negative electrode 122 to the lower surface of the base plate 123 so that it may directly contact the ground, the high-voltage arcs are more easily conducted to the root of the weed, facilitating improvement of weed killing effect.

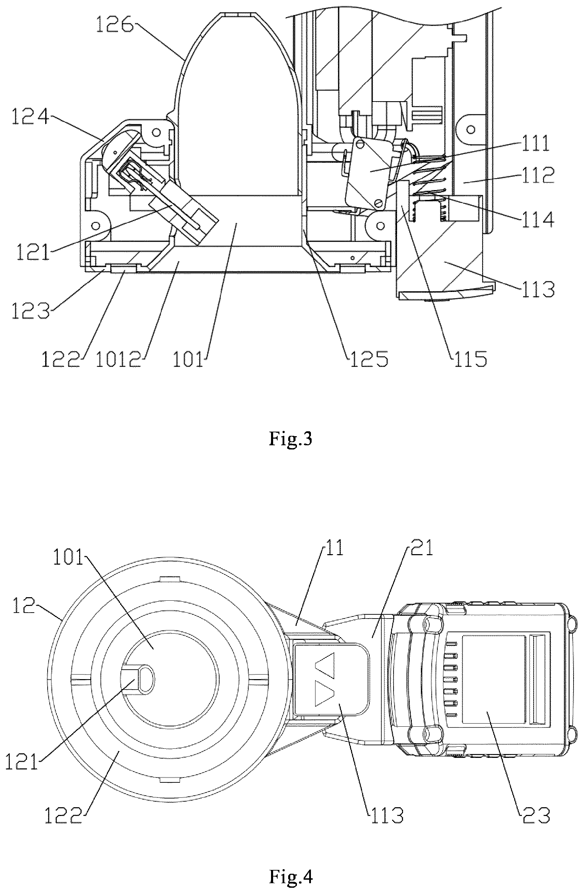

In an example embodiment, the cylindrical body 125 and the upper cover 124 are formed of a unitary structure; in an alternative embodiment, the cylindrical body 125 and the base plate 123 are also formed of a unitary structure, as illustrated in Fig. 3; this not only reduces the number of parts, but also facilitates assembly; while the base plate 123 may form a structural support to the periphery of the cylindrical body 125, thereby enhancing structural stability of the cylindrical body 125 and extending service life of the cylindrical body 125. Of course, the cylindrical body 125 may be standalone formed and securely assembled with the upper cover 124 and the base plate 123.

In an example embodiment, to improve user operationality, the bottom end of the cylindrical body 125 may be designed such that a flared opening 1012 guiding the plant to enter the arcing chamber 101 is formed at the inner wall of the arcing chamber 101, whereby the weed can smoothly and quickly enter the arcing chamber 101 along the flared opening 1012.

In an example embodiment, the cylindrical body 125 and the negative electrode 122 may be formed of a ring shape and concentrically arranged. In this case, after the weed enters the arcing chamber 101, irrespective of how it tilts, it would have a minimal distance with the negative electrode 122, which facilitates conduction of the high-voltage arcs and further enhances weed removal efficiency and effect. The ring-shaped structure of the negative electrode 122 renders a maximum area under the same peripheral length, so that the opening 1011 of the bottom end of the arcing chamber 101 may be made bigger to facilitate letting in the weed.

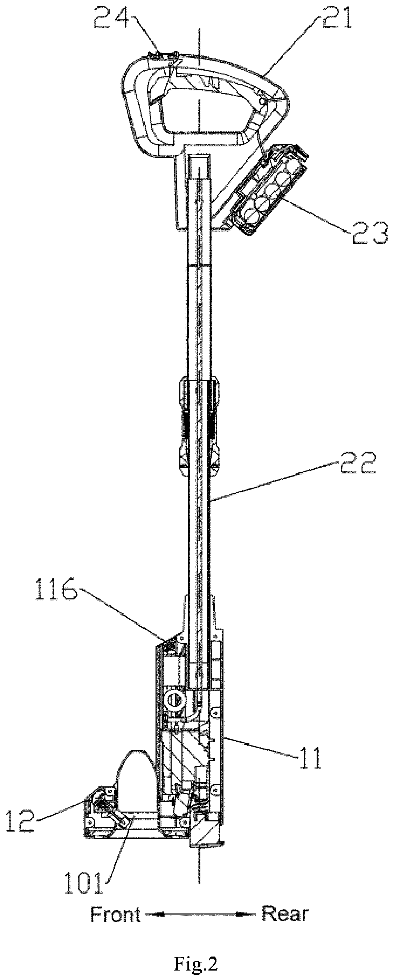

In an example embodiment, to increase operational radius of the user, the handle 200 is generally designed to comprise a grip 21 and a connecting tube 22, the connecting tube 22 being connected between the grip 21 and the base portion 11; a battery 23 supplying power to the electrode assembly is provided at the bottom portion of the grip 21; the battery 23 and the operating portion 12 are disposed at the front and rear sides of the connecting tube 22 along a horizontal direction, respectively, so as to balance center of gravity. The front and rear orientations may refer to the illustrations in Fig. 2, where left refers to front, and right refers to rear; the operating portion 12 is located at the left side of the dotted line, and the battery 23 is located at the right side of the dotted line. When operating the weed burner, a user generally holds the grip 21 with one hand and holds the connecting tube 22 with the other hand; given that the weights of all components are certain, when moving the weed burner, the user may lift the weed burner with the hand holding the connecting tube 22 so that the operating portion 12 leaves the ground. With the position where the connecting tube 22 is held by the hand as the fulcrum, the entire weed burner is formed as a lever, so that the weight of the battery 23 and the weight of the operating portion 12 reach certain balance relative to the fulcrum. To change the position of the operating portion 12, it is unnecessary for the user to lift the weight of the whole main body 100, as the hand holding the grip 21 can easily change the position of the operating portion 12 relative to the ground. Therefore, the disclosure not only facilitates the user's operation, but also allows the weed to enter the arcing chamber 101 more accurately and quickly, thereby enhancing weed removal efficiency.

During weed removal, the user needs to frequency control energization and de-energization of the electrode assembly; to improve operationality, in an example embodiment, an operating switch 24 for controlling operation of the electrode assembly is provided on a top portion of the grip 21. Of course, the operating switch 24 may also be disposed at a bottom portion of the main body 100 and formed of a peddle pattern. The user may energize the electrode assembly by stepping on the pedal and deenergize the electrode assembly by releasing the pedal.

In an example embodiment, to enhance safety of operating the weed burner, a safety switch 111 electrically connected to the electrode assembly may be provided at the base portion 11, a sliding groove 112 having a downward opening is provided at the underside of the base portion 11, a slider 113 is provided in the sliding groove 112, an elastic member 114 for maintaining a tendency of the slider 113 to project out of the sliding groove 112 is provided on the slider 113, and the slider 113 is provided with a trigger portion 115 triggering the safety switch 111 when the underside of the slider 113 is in flush with the underside of the operating portion 12. When the main body 100 is vertically oriented on the ground to perform a weed burning operation, the slider 113 moves upward along the sliding groove 112; when the underside of the slider 113 becomes in flush with the underside of the main body 100, the trigger portion 115 of the slider 113 triggers the safety switch 111, whereby the electrode assembly can be activated normally. Cooperation between the slider 113 and the safety switch 111 ensures that the electrode assembly is only activated when the main body 100 is vertically oriented on the ground, which prevents unintentional activation of the electrode assembly and thus enhances operational safety. The sliding groove 112 has a downward opening, and the slider 113 slides along the sliding groove 112, so that when the underside of the main body 100 leaves the ground, the slider 113 can drive, under its own gravitational force, the trigger portion 115 away from the safety switch 111, whereby the electrode assembly is deactivated, realizing automatic shutdown; in this way, if an emergency occurs to the user during operation, the electrode assembly may be shut down only by causing the underside of the main body 100 to leave the ground, e.g., toppling the weed burner on the ground, thereby reducing possible occurrence of hazard accidents and further enhancing operational safety of the disclosure. In addition, the elastic member 114 provided on the slider 113 can maintain that the slider 113 always have a tendency of projecting out of the sliding groove 112, so as to ensure that the trigger portion 115 can move away from the safety switch 111 when the underside of the main body 100 leaves the ground, further reducing possibility of unintentional activation of the electrode assembly. Furthermore, when the main body 100 topples, the elastic member 114 can still drive the slider 113 to project out of the sliding groove 112, thereby reducing possibility of unintentional activation of the electrode assembly. The safety switch 111 may adopt a microswitch; the trigger portion 115 comprises a boss disposed on the top end of the slider 113; the boss acts on the microswitch finger to switch on the microswitch. In a further example embodiment, the safety switch 111 may be a magnetic switch, where the trigger portion 115 comprises a magnet disposed on top of the slider 113; when the magnet moves close to the magnetic switch, the magnetic switch is switched on or off. The magnetic switch may be a miniaturized part such as a Hall element or a reed switch, which may further reduce the footprint of the safety switch 111 and shrink the size of the main body 100, rendering the disclosure more compact and lighter as a whole to facilitate transportation and storage. The elastic member 114 may select a spring, or a spring washer, or an elastic metal sheet.

In an example embodiment, a transparent insulation hood 126 is provided on the operating portion 12 to cover the top end of the arcing chamber 101. The transparent insulation hood 126 does not affect the user's line of sight when observing the arcing chamber 101, but may shield the top portion of the arcing chamber 101 to prevent dust flying during weed removal, which can maintain a clean upper surface of the main body 100, further enhancing user experience. The transparent insulative hood 126 can also prevent random flying of sparks generated during weed removal, which reduces potential occurrence of hazard accidents and further lowers safety risks. The transparent insulation hood 126 can also prevent safety incidents from occurring when a human body part enters the arcing chamber 101 via the top portion while the weed burner is operating. The transparent insulation hood 126 may be detachably connected to the cylindrical body 125, e.g., a simple interference-fitting connection, so as to facilitate the user to remove for cleaning.

To further enhance user experience, in an example embodiment, a display interface 116 may be provided on a top end surface of the base portion 11 so as to facilitate direct observation of the operating state of the weed burner. To further enhance user experience, in an example embodiment, a loudspeaker may be provided at the base portion 11 to alert the user by sound, e.g., prompting the user that the weed burner starts operating or the electrode assembly is to discharge high-voltage arcs, to alert the user to take caution. The loudspeaker may be alternatively set on the handle 200 so as to be closer to the user.

## Claims

1. A weed burner, comprising a main body (100) and a handle (200), the main body (100) comprising a base portion (11) and an operating portion (12), the base portion (11) being connected to the handle (200), the operating portion (12) projecting forwardly relative to the base portion (11), wherein the operating portion (12) is provided with an arcing chamber (101) for letting in a plant and an electrode assembly for discharging high-voltage arcs to the plant in the arcing chamber (101), the arcing chamber (101) extending through the operating portion (12), a bottom end of the arcing chamber (101) being opened and located at an underside of the operating portion (12); and the electrode assembly comprises a positive electrode (121) and a negative electrode (122), the positive electrode (121) being disposed in the operating portion (12) and tilting downward into the arcing chamber (101), the negative electrode (122) being disposed at an underside of the operating portion (12) and surrounding an opening (1011) of the bottom end of the arcing chamber (101).

2. The weed burner according to claim 1, wherein the operating portion (12) comprises a base plate (123), an upper cover (124), and a cylindrical body (125) forming the arcing chamber (101), a top end of the cylindrical body (125) being connected to the upper cover (124), a bottom end of the cylindrical body (125) being connected to the base plate (123), the arcing chamber (101) extending through the base plate (123) and the upper cover (124), the positive electrode (121) extending through the cylindrical body (125) into the arcing chamber (101), the negative electrode (122) being mounted at a lower surface of the base plate (123).

3. The weed burner according to claim 2, wherein the cylindrical body (125) and the upper cover (124) are formed of a unitary structure, or the cylindrical body (125) and the base plate (123) are formed of a unitary structure.

4. The weed burner according to claim 2, wherein the bottom end of the cylindrical body (125) is formed of a flared opening (1012) at an inner wall of the arcing chamber (101) to guide the plant to enter the arcing chamber (101).

5. The weed burner according to claim 2, wherein the cylindrical body (125) and the negative electrode (122) are both of circular shapes and concentric with each other.

6. The weed burner according to claim 1, wherein the handle (200) comprises a grip (21) and a connecting tube (22), the connecting tube (22) being connected between the grip (21) and the base portion (11), a battery (23) for supplying power to the electrode assembly being disposed at a bottom portion of the grip (21), the battery (23) and the operating portion (12) are disposed at front and rear sides of the connecting tube (22) in a horizontal direction, respectively, to balance center of gravity.

7. The weed burner according to claim 6, wherein an operating switch (24) for controlling operation of the electrode assembly is provided at a top portion of the grip (21).

8. The weed burner according to claim 1, wherein the base portion (11) is provided with a safety switch (111) electrically connected to the electrode assembly, a sliding groove (112) having a downward opening is provided at an underside of the base portion (11), a slider (113) is provided in the sliding groove (112), on the slider (113) is provided an elastic member (114) maintaining a tendency of the slider (113) to project out of the sliding groove (112), and the slider (113) is provided with a trigger portion (115) for triggering the safety switch (111) when an underside of the slider (113) is in flush with the underside of the operating portion (12).

9. The weed burner according to claim 1, wherein a transparent insulation hood (126) is provided on the operating portion (12) to cover on top of the arcing chamber (101).

10. The weed burner according to claim 1, wherein a display interface is provided at a top end surface of the base portion (11); and/or, the base portion (11) is provided with a loudspeaker.

## Patentansprüche

1. Unkrautbrenner, umfassend einen Hauptkörper (100) und einen Griff (200), wobei der Hauptkörper (100) einen Basisabschnitt (11) und einen Betriebsabschnitt (12) umfasst, wobei der Basisabschnitt (11) mit dem Griff (200) verbunden ist und der Betriebsabschnitt (12) relativ zu dem Basisabschnitt (11) nach vorne vorsteht, wobei der Betriebsabschnitt (12) mit einer Lichtbogenkammer (101) zum Einlassen einer Pflanze und einer Elektrodenanordnung zum Entladen von Hochspannungslichtbögen auf die Pflanze in der Lichtbogenkammer (101) versehen ist, wobei sich die Lichtbogenkammer (101) durch den Betriebsabschnitt (12) erstreckt, ein unteres Ende der Lichtbogenkammer (101) offen ist und an einer Unterseite des Betriebsabschnitts (12) liegt; und wobei die Elektrodenanordnung eine positive Elektrode (121) und eine negative Elektrode (122) umfasst, wobei die positive Elektrode (121) in dem Betriebsabschnitt (12) platziert und nach unten in die Lichtbogenkammer (101) geneigt ist und die negative Elektrode (122) an einer Unterseite des Betriebsabschnitts (12) platziert ist und eine Öffnung (1011) des unteren Endes der Lichtbogenkammer (101) umgibt.

2. Unkrautbrenner nach Anspruch 1, wobei der Betriebsabschnitt (12) eine Basisplatte (123), eine obere Abdeckung (124) und einen zylindrischen Körper (125), der die Lichtbogenkammer (101) bildet, umfasst, wobei ein oberes Ende des zylindrischen Körpers (125) mit der oberen Abdeckung (124) verbunden ist, ein unteres Ende des zylindrischen Körpers (125) mit der Basisplatte (123) verbunden ist, sich die Lichtbogenkammer (101) durch die Basisplatte (123) und die obere Abdeckung (124) erstreckt, sich die positive Elektrode (121) durch den zylindrischen Körper (125) in die Lichtbogenkammer (101) erstreckt und die negative Elektrode (122) an einer unteren Oberfläche der Basisplatte (123) montiert ist.

3. Unkrautbrenner nach Anspruch 2, wobei der zylindrische Körper (125) und die obere Abdeckung (124) aus einer einstückigen Struktur gebildet sind oder der zylindrische Körper (125) und die Basisplatte (123) aus einer einstückigen Struktur gebildet sind.

4. Unkrautbrenner nach Anspruch 2, wobei das untere Ende des zylindrischen Körpers (125) an einer Innenwand der Lichtbogenkammer (101) als eine aufgeweitete Öffnung (1012) ausgebildet ist, um die Pflanze zum Eintreten in die Lichtbogenkammer (101) zu führen.

5. Unkrautbrenner nach Anspruch 2, wobei der zylindrische Körper (125) und die negative Elektrode (122) beide kreisförmig und konzentrisch zueinander sind.

6. Unkrautbrenner nach Anspruch 1, wobei der Griff (200) einen Griffabschnitt (21) und ein Verbindungsrohr (22) umfasst, wobei das Verbindungsrohr (22) zwischen dem Griffabschnitt (21) und dem Basisabschnitt (11) verbunden ist, eine Batterie (23) zum Versorgen der Elektrodenanordnung mit Strom an einem unteren Abschnitt des Griffabschnitts (21) platziert ist und die Batterie (23) und der Betriebsabschnitt (12) jeweils an einer Vorderseite und einer Rückseite des Verbindungsrohrs (22) in einer horizontalen Richtung platziert sind, um den Schwerpunkt auszugleichen.

7. Unkrautbrenner nach Anspruch 6, wobei ein Betriebsschalter (24) zum Steuern des Betriebs der Elektrodenanordnung an einem oberen Abschnitt des Griffabschnitts (21) vorgesehen ist.

8. Unkrautbrenner nach Anspruch 1, wobei der Basisabschnitt (11) mit einem Sicherheitsschalter (111) versehen ist, der elektrisch mit der Elektrodenanordnung verbunden ist, eine Gleitnut (112) mit einer nach unten gerichteten Öffnung an einer Unterseite des Basisabschnitts (11) vorgesehen ist, ein Schieber (113) in der Gleitnut (112) vorgesehen ist, an dem Schieber (113) ein elastisches Element (114) vorgesehen ist, das eine Tendenz des Schiebers (113) aufrechterhält, aus der Gleitnut (112) vorzustehen, und der Schieber (113) mit einem Auslöseabschnitt (115) zum Auslösen des Sicherheitsschalters (111) versehen ist, wenn eine Unterseite des Schiebers (113) bündig mit der Unterseite des Betriebsabschnitts (12) ist.

9. Unkrautbrenner nach Anspruch 1, wobei eine transparente Isolierhaube (126) an dem Betriebsabschnitt (12) vorgesehen ist, um eine Oberseite der Lichtbogenkammer (101) abzudecken.

10. Unkrautbrenner nach Anspruch 1, wobei eine Anzeigeschnittstelle an einer oberen Endfläche des Basisabschnitts (11) vorgesehen ist; und/oder der Basisabschnitt (11) mit einem Lautsprecher versehen ist.

## Revendications

1. Brûleur de mauvaises herbes, comprenant un corps principal (100) et un manche (200), le corps principal (100) comprenant une partie de base (11) et une partie de travail (12), la partie de base (11) étant reliée au manche (200), la partie de travail (12) faisant saillie vers l'avant par rapport à la partie de base (11), dans lequel la partie de travail (12) est pourvue d'une chambre d'arc (101) destinée à laisser entrer une plante et d'un ensemble d'électrodes destiné à décharger des arcs à haute tension sur la plante dans la chambre d'arc (101), la chambre d'arc (101) s'étendant à travers la partie de travail (12), une extrémité inférieure de la chambre d'arc (101) étant ouverte et située au niveau d'une face inférieure de la partie de travail (12) ; et l'ensemble d'électrodes comprend une électrode positive (121) et une électrode négative (122), l'électrode positive (121) étant disposée dans la partie de travail (12) et s'inclinant vers le bas jusque dans la chambre d'arc (101), l'électrode négative (122) étant disposée au niveau d'une face inférieure de la partie de travail (12) et entourant une ouverture (1011) de l'extrémité inférieure de la chambre d'arc (101).

2. Brûleur de mauvaises herbes selon la revendication 1, dans lequel la partie de travail (12) comprend une plaque de base (123), un couvercle supérieur (124) et un corps cylindrique (125) formant la chambre d'arc (101), une extrémité supérieure du corps cylindrique (125) étant reliée au couvercle supérieur (124), une extrémité inférieure du corps cylindrique (125) étant reliée à la plaque de base (123), la chambre d'arc (101) s'étendant à travers la plaque de base (123) et le couvercle supérieur (124), l'électrode positive (121) s'étendant à travers le corps cylindrique (125) jusque dans la chambre d'arc (101), l'électrode négative (122) étant montée sur une surface inférieure de la plaque de base (123).

3. Brûleur de mauvaises herbes selon la revendication 2, dans lequel le corps cylindrique (125) et le couvercle supérieur (124) sont formés d'une structure monobloc, ou le corps cylindrique (125) et la plaque de base (123) sont formés d'une structure monobloc.

4. Brûleur de mauvaises herbes selon la revendication 2, dans lequel l'extrémité inférieure du corps cylindrique (125) est formée d'une ouverture évasée (1012) au niveau d'une paroi intérieure de la chambre d'arc (101) pour guider la plante afin qu'elle entre dans la chambre d'arc (101).

5. Brûleur de mauvaises herbes selon la revendication 2, dans lequel le corps cylindrique (125) et l'électrode négative (122) sont tous deux de forme circulaire et concentriques l'un par rapport à l'autre.

6. Brûleur de mauvaises herbes selon la revendication 1, dans lequel le manche (200) comprend une poignée (21) et un tube de liaison (22), le tube de liaison (22) étant relié entre la poignée (21) et la partie de base (11), une batterie (23) destinée à alimenter en énergie l'ensemble d'électrodes étant disposée au niveau d'une partie inférieure de la poignée (21), la batterie (23) et la partie de travail (12) sont disposées respectivement sur les côtés avant et arrière du tube de liaison (22) dans une direction horizontale, pour équilibrer le centre de gravité.

7. Brûleur de mauvaises herbes selon la revendication 6, dans lequel un interrupteur de commande (24) destiné à commander le fonctionnement de l'ensemble d'électrodes est prévu au niveau d'une partie supérieure de la poignée (21).

8. Brûleur de mauvaises herbes selon la revendication 1, dans lequel la partie de base (11) est pourvue d'un interrupteur de sécurité (111) relié électriquement à l'ensemble d'électrodes, une rainure de coulissement (112) présentant une ouverture orientée vers le bas est prévue au niveau d'une face inférieure de la partie de base (11), un coulisseau (113) est prévu dans la rainure de coulissement (112), sur le coulisseau (113) est prévu un élément élastique (114) maintenant une tendance du coulisseau (113) à faire saillie hors de la rainure de coulissement (112), et le coulisseau (113) est pourvu d'une partie de déclenchement (115) destinée à actionner l'interrupteur de sécurité (111) lorsqu'une face inférieure du coulisseau (113) affleure la face inférieure de la partie de travail (12).

9. Brûleur de mauvaises herbes selon la revendication 1, dans lequel un capot isolant transparent (126) est prévu sur la partie de travail (12) pour recouvrir la chambre d'arc (101) par le dessus.

10. Brûleur de mauvaises herbes selon la revendication 1, dans lequel une interface d'affichage est prévue au niveau d'une surface d'extrémité supérieure de la partie de base (11) ; et/ou la partie de base (11) est pourvue d'un haut-parleur.
